# EUROPEAN PATENT SPECIFICATION

(11) **EP 1 384 615 B1**
(45) Date of publication and mention of the grant of the patent: **03.05.2006**
(21) Application number: 03019995.4
(22) Date of filing: 08.09.1998
(51) Int. Cl.: B60J 10/04, B60J 10/00

(54) **Car door glass run**
Kraftfahrzeug- Türfensterscheiben- Führungskanal
Canal de guidage d'une vitre coulissante de véhicule

(30) Priority: 08.09.1997 JP 26101797
(43) Date of publication of application: 28.01.2004
(62) Divisional of application: 98116955.0
(73) Proprietor: TOYODA GOSEI CO., LTD., Nishikasugai-gun, Aichi (JP)
(72) Inventor: Ohmori, Hitoshi, Toyoake-shi Aichi (JP); Aritake, Masanori, Ichinomiya-shi Aichi (JP); Yatuda, Atushi, c/o Toyoda Gosei Co., Ltd., Nishikasugai-gun, Aichi 452-8564 (JP)
(74) Representative: Kramer - Barske - Schmidtchen

(56) References cited:
- DE-A- 2 127 097
- FR-A- 2 551 826
- US-A- 4 278 487
- US-A- 5 247 764
- US-A- 5 265 377

## Description

The present invention relates to a door glass run to be attached on a door frame of a car door.

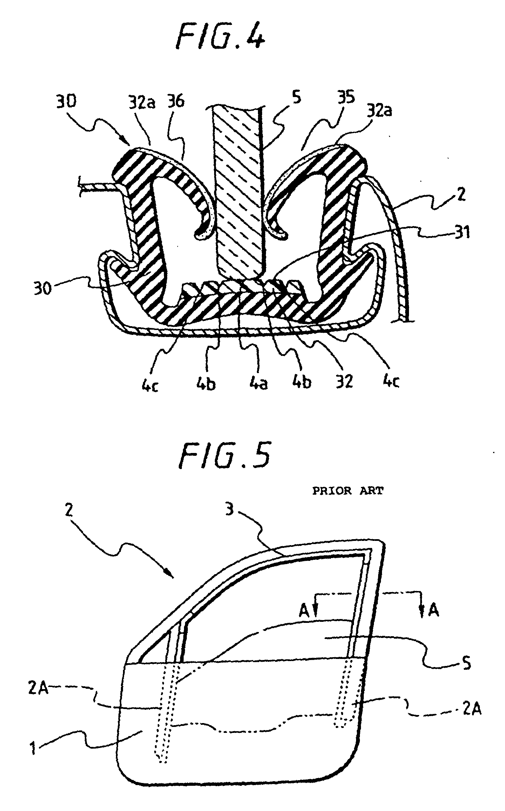

As shown in Fig. 5, a door glass run 3 (hereinafter, simply referred to as a glass run) is attached on a door frame 2 of a door 1 of a car along an inner side of the door frame 2 for guiding up/down movement of a door glass 5 and sealing a gap between a circumferential edge of the closed door glass 5 and the door frame 2. Further, front and rear vertical extension frame portions 2A of the door frame 2 are provided in a door body and the glass run 3 is attached also on each of the vertical extension frame portions 2A.

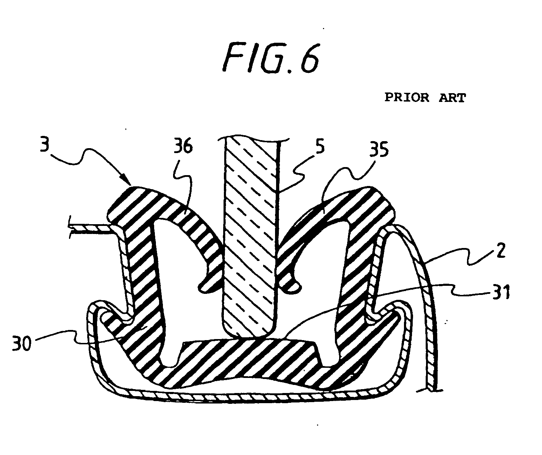

Such a glass run 3, generally, has the configuration as shown in Fig. 6, in which lips 35 and 36 extend, in a direction to face each other, from the opposite ends, at an opening side, of a body portion 30 which is U-shaped in section. In the glass run 3 attached on a vertical frame of a door frame 2 including extension frame portions 2A, the door glass 5 moves up/down in the state where a peripheral edge of the door glass 5 is in contact with, its opposite surfaces, between the lips 35 and 36 of the glass run 3, and an end surface of the door glass 5 is also in contact with a bottom surface 31 of the glass run 3.

The bottom surface 31 of the glass run 3 is subjected to smoothening treatment by spraying urethane resin, silicon resin, or the like so as to improve the slidability of the door glass 5. However, there has been a problem that foreign matters such as sand, dust, and the like may come into the body portion 30 of the glass run 3 and may deposit on the bottom surface 31 to thereby gradually reduce the slidability of the door glass 5.

U.S. Patent No. 5,265,377 discloses a glass run having furrows that are inclined at a predetermined angle with respect to the sliding direction of a window glass.

It is an object of the present invention to provide a glass run having improved slide surfaces and improved durability, which glass run can also prevent abnormal sounds from occuring when a door glass is moved up/down without negatively influencing other functions of the glass run.

This object is achieved by the door glass run of claim 1 showing that the grooves are formed in the bottom surface of a glass run only on opposite sides of a flat surface portion having no grooves. Additional embodiments of the claimed invention are recited in sub-claims 2 to 8.

According to the present invention, a plurality of grooves are formed in a bottom surface of a glass run body portion having a U-shaped cross-section so as to extend longitudinally at predetermined intervals widthwise. In one embodiment, the grooves are designed so as to have cross-sectional areas which sequentially become larger from the groove formed adjacent to a flat surface portion of the bottom surface to the groove formed on each opposite side of the flat surface portion.

When the door glass moves up/down, the end surface of the door glass moves up/down while slightly transversely vibrating with respect to the central line of a bottom surface of a glass run because the car body vibrates or because the curvature of the door frame becomes slightly different from that of the door glass in accordance with the vertical position of the door glass. The present teachings have paid attention to the fact that foreign matters, which deposit on a bottom surface of a glass run, are swept out to the opposite sides by the end surface of door glass when the door glass vibrates transversely. That is, according to the invention, the foreign matters which have deposited on the central portion of the bottom surface of the glass run are swept into/out of the opposite sides when the door glass moves up/down, and the large part of the foreign matters fall into the large grooves formed in the opposite portions on the bottom surface to be thereby discharged. The groove formed adjacent to the central portion of the bottom surface is small and, hence, even if the groove is filled with the foreign matters, the glass sliding resistance does not become large so that no abnormal sounds are generated, because the groove is positioned outside the range of the glass. Further, although no groove is formed in the central portion of the bottom surface with which the door glass comes into slide-contact, the amount of foreign matter which may remain in spite of sweeping-out is very small and hence the sliding resistance is hardly increased.

In the accompanying drawings:
Fig. 1 is a sectional view showing a door glass run according to a first embodiment, taken along line A-A in Fig. 5 (not part of this invention) ;
Fig. 2 is a sectional view showing a door glass run according to a second embodiment, taken along line A-A in Fig. (not part of this invention) ;
Fig. 3 is a sectional view showing a door glass run according to a third embodiment, taken along line A-A in Fig. 5;
Fig. 4 is a sectional view showing a door glass run according to a fourth embodiment, taken along line A-A in Fig. 5 (not part of this invention) ;
Fig. 5 is a view showing a car door to which the door glass run is applied;
Fig. 6 is a sectional view showing an example of a known door glass run, taken along line A-A in Fig. 5;
Fig. 7A (not part of this invention) is a sectional view showing a door glass run according to a fifth embodiment and Fig. 7B (not part of this invention) is an enlarged sectional view of X portion in Fig. 7A; and
Fig 8A (not part of this invention) is a sectional view showing a door glass run according to a sixth embodiment and Fig. 8B (not part of this invention) is an enlarged sectional view of Y portion in Fig. 8A.

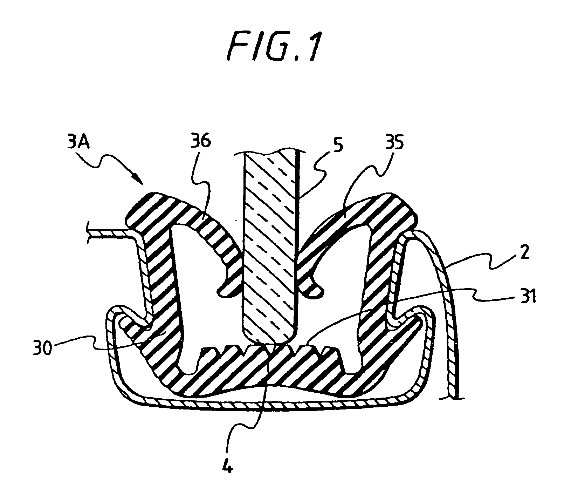

The embodiments of the door glass run shown in Figs. 1, 2 and 4-8 are disclosed for the purpose of understanding the inventive embodiment shown in Fig. 3 and embodiments of the sub-claims.

Fig. 1 shows a glass run 3A according to a first embodiment. This glass run is attached on the vertical frame portion of the door frame 2 of the car shown in Fig. 5.

The glass run 3A is formed of an extrusion molding of rubber, for example, EPDM (ethylene-propylene-diene) rubber, and has a fundamental configuration in which lips 35 and 36 extend from the opposite ends, at the opening side, of a body portion 30 that is U-shaped in section. A bottom wall is designed to be thicker than the remaining portion. Generally, a door glass 5 has a thickness of about 4 mm and an end surface that is arch-shaped in section. The door glass 5 moves up/down in the state where the door glass 5 is in contact with the lips 35 and 36 at its inner and outer surfaces, and a central portion of a side edge surface of the door glass 5 is in contact with a bottom surface 31 of the glass run 3A.

In the glass run 3A, a plurality of uniform grooves 4 are formed in a bottom surface 31 so as to extend longitudinally at predetermined intervals widthwise to thereby reduce a sliding area between an end surface of door glass 5 and the bottom surface 31 and to thereby bury a part of the foreign matter, which has entered the glass run, into the grooves 4. Each of the grooves it is shaped in the form of an inverted triangle in section.

In this glass run 3A, by forming the grooves 4 in the bottom surface 31 of the glass run 3A, the area of slide-contact between a door glass end surface and the bottom surface 31 of the glass run 3A can be reduced, and foreign matter which has been deposited on the bottom surface 31 of the glass run body portion 30 can be discharged into the grooves 4 to thereby reduce the sliding resistance of the door glass 5 against the bottom surface of the glass run 3A.

If the above glass run 3A is used for a long time, there is a possibility that foreign matter will gradually accumulate in the grooves 4 so that the grooves 4 become filled with the foreign matter. In this case, the foreign matter accumulated in the grooves 4 may come into slide-contact with the end surface of the door glass 5 to thereby increase the frictional resistance and generate abnormal sounds when the door glass 5 is moved up/down.

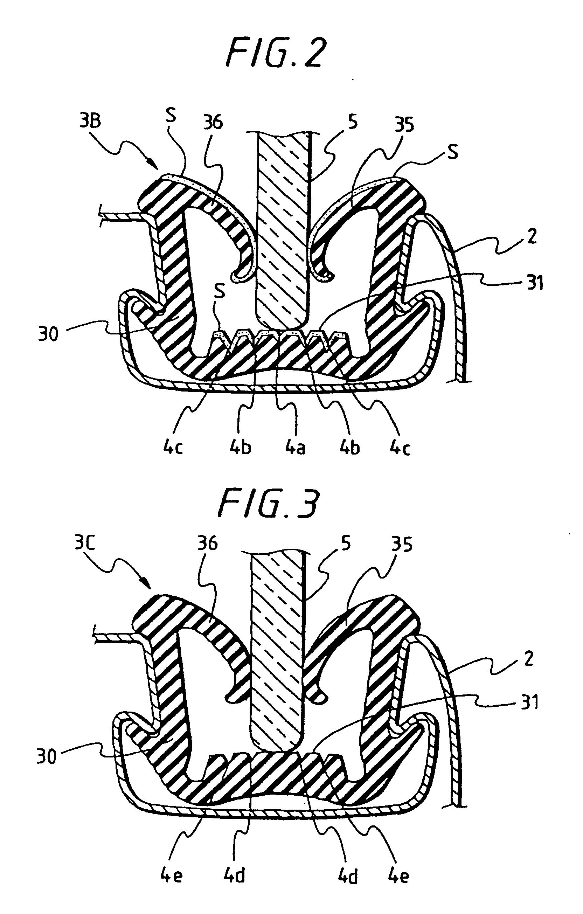

Fig. 2 shows a glass run 3B according to a second embodiment.

In the glass run 3B shown in Fig. 2, a plurality of mutually-parallel grooves 4a, 4b, and 4c are formed in the bottom surface 31 so as to extend longitudinally at equal intervals widthwise. Each of the grooves is shaped in the form of an inverted triangle in section and the grooves are designed so as to have sectional areas which become larger in order from the groove formed in a widthwise central portion of the bottom surface 31 to the groove formed on each of the opposite sides of the central portion of the bottom surface 31. In the illustrated embodiment, the groove 4a is formed in the widthwise central position of the bottom surface 31; the grooves 4c are formed in the widthwise opposite-end portions; and the grooves 4b are formed in the intermediate portions between the grooves 4a and 4c. The opening width and depth of the groove 4a are selected to be about 0.2 - 0.3 mm and about 0.2 - 0.3 mm, respectively. The opening width and depth of the groove 4c are selected to be about 0.7 - 1.0 mm and about 0.4 - 0.6 mm, respectively. The opening width and depth of the groove 4b are selected to be intermediate values between those of the grooves 4a and 4c. The widths of the land portions between the grooves 4a, 4b, and 4c are selected to be an equal value of 0.7 - 0.8 mm. The bottom surface having the grooves 4a, 4b, and 4c formed therein and the surfaces of the lips 35 and 36 are subjected to a smoothening treatment S with urethane resin. The sectional shape of each of the grooves is not limited to such an inverted triangle but it may be shaped into a quadrangle.

In case of the thus formed glass run 3A, the end surface of the door glass 5 moves up/down while it is in slide-contact with the land portions of the bottom surface 31 of the glass run 3A. In this case, the end surface of the door glass 5 is in slide-contact only with the land portions between the grooves so that the influence of foreign matter attached on the bottom surface 31 is reduced. Even if a large quantity of foreign matter has been deposited, the foreign matter on the land portions is swept out right and left by the end surface of the door glass 5 transversely vibrating when the door glass is moved up/down, so that the foreign matter falls into the grooves 4a, 4b, and 4c. Further, even if the central groove 4a is filled with foreign matter, the contact area of the foreign matter with the end surface of the door glass 5 is small, so that the sliding resistance is not greatly increased and no abnormal sounds are generated. Further, when the door glass moves up/down, the maximum width of transverse movement of the central portion of the end surface of the door glass 5 to contact with the bottom surface 31 of the glass run 3B by a transverse vibration of the door glass 5 is limited by the distance between the grooves 4a and 4b. Because the groove 4b is larger than the groove,4a, the groove 4b is not completely filled with foreign mater before long-term use. Thus, even if the groove 4b is filled with foreign matter, the foreign matter hardly inparts a large influence on the sliding resistance of the door glass 5. Since the foreign matter swept out by the door glass 5 is received in the grooves 4b and 4c, this provides a function of preventing the swept-out foreign matter from falling and being deposited again on the central portion of the glass run bottom surface 31.

Fig. 3 shows a glass run 3C according to a third embodiment, which embodiment falls within the scope of the appended claim 1. In the glass run 3C shown in Fig. 3, a central portion of a bottom surface 31 is formed into a flat surface with no groove, and longitudinally extending grooves 4d and 4e are formed in the opposite side portions. The flat surface in the central portion is designed to have a width which is equal to the width of lateral or left/right vibration of the central portion of the end surface of the door glass 5 which contacts the flat surface when the door glass 5 moves up/down. Specifically, the width of the flat surface is selected to be about 3-4 mm. The opening width and depth of each of the grooves 4d and 4e on the opposite sides are selected to be 0.7 - 1.0 mm and about 0.4 - 0.6 mm, respectively.

Similar to the glass run 3B, in the case of the glass run 3C, foreign matter which has been deposited on a bottom surface central portion with which the door glass 5 is in slide-contact is discharged into opposite-side grooves 4d and 4e. In the glass run 3C, since no groove is formed in the bottom surface central portion, the glass sliding area is slightly increased correspondingly, in comparison with the glass run 3B. On the other hand, however, there is no groove in the central portion which may fill with foreign matter. Accordingly, the end surface of the door glass 5 never comes into slide-contact with the accumulated foreign matter in the central groove. Further, the glass run having the grooves formed in its bottom surface may be integrally molded with an olefin thermoplastic elastomer.

Fig. 4 shows a glass run 3D according to a fourth embodiment. In a glass run 3D shown in Fig. 4, a surface layer 32 which is formed of a material different from that of a glass run body and which is superior in smooth property is formed on the surface of a bottom wall of the body portion 30 so as to face an end surface of the door glass 5, and grooves for receiving foreign matter are formed in an upper surface 31 constituting a bottom wall of the glass run 3D. A surface layer 32a, which is formed of a different material in place of carry ing-out a smoothening treatment S and which has superior smoothness may be formed on the surface of each of lips 35 and 36. The surface layer 32, 32a is formed of a olefin group resin, for example, polyethylene, polypropylene, etc., or an olefin group thermoplastic elastomer, and the surface layer 32 has the same grooves 4a, 4b, and 4c as those in the glass run 3D. Further, the upper surface 31 on the surface layer 32 may be formed in the same manner as that in the case of the glass run 3c. The surface layer 32 is integrally formed with an upper surface of a bottom wall of the glass run 3D by extrusion molding or by adhering a tape member and fusion bonding thereafter. Incidentally, in the glass run 3D, it is not necessary to subject the surface layer 32 to a smoothening treatment by spraying or the like. The glass run body may be formed by using a synthetic resin, such as PVC (polyvinyl chloride) or the like, or an olefin group thermoplastic elastomer, in addition to the foregoing EPDM rubber.

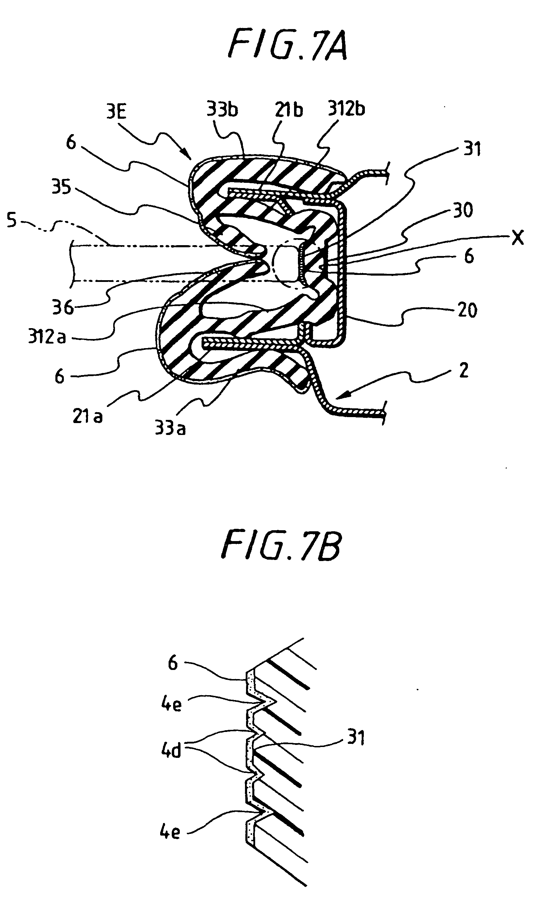

Fig. 7 shows a glass run 3E according to a fifth embodiment. The glass run 3E is attached on the door frame 2 shown in Fig. 5 so that the portion is positioned along the vertical frame portion of the door frame 2. The glass run 3E is obtained by extrusion-molding with TPO (olefin thermoplastic elastomer), and integrally provided with a body portion 30 substantially U-shaped in section; seal lips 35 and 36 extend from opened front ends of opposite side walls 312a and 312b of the body portion 30 so as to face each other; and mole lips 33a and 33b extend from the opened front ends of the opposite side walls 312a and 312b along the outsides of the opposite walls 312a and 312b reversely to the seal lips 35 and 36. The glass run 3E is attached on the door frame 2 in such a manner that the body portion 30 is fitted onto a channel portion 20 formed in a inner circumference of the door frame 2, and the mole lips 33a and 33b formed inside and outside a car are pressed against inside and outside walls 21a and 21b of the channel portion 20 opposite to the mole lips 33a and 33b respectively.

In the glass run 3E, a coating film 6 of a sliding material is formed on the bottom surface 31 and the whole surface extending from the facing surfaces of the seal lips 35 and 36 to front ends of the mole lips 33a and 33b in the same manner as that in the case of the glass run 3B which is the second embodiment illustrated in Fig. 2. The seal lips 35 and 36 are in slide-contact with the door glass 5 while being in contact with the door glass 5 when the door glass 5 moves up/down, and the coating film 6 acts also as a coating member of a designed surface. Further, grooves 4d and 4e are formed in the bottom surface 31 so as to be in slide-contact with the end surface of the door glass 5 and are designed so as to have sectional areas which become larger in order from the groove formed in the widthwise central portion of the bottom surface 31 to the groove formed on each of the opposite sides of the central portion in the bottom surface 31. Further, the surfaces of the grooves 4d and 4e are also covered with the same coating film 6 as described above so that the grooves 4d and 4e do not fill with foreign matter.

As the material of the coating film 6, it is possible to use a mixture material obtained by mixing TPO with a polypropylene or polyethylene which is fusible to TPO, or a mixture material obtained in such a manner that TPO and styrene are blended with each other and the thus obtained material is mixed with polypropylene, etc. Polypropylene gives hardness, brightness and glass slidability to a coating film. Further, as the coating film 6, a polyethylene monomer or a polypropylene monomer may be also used. The coating film 6 may be extrusion-molded at the same time that the glass run 3E is extrusion-molded.

The extrusion-molded coating film 6 is strongly bonded to the body portion 30 of the glass run 3E of TPO and is extremely glossy with improved brightness in comparison with TPO extrusion moldings. When the extrusion-molded glass,run of TPO, in which the whole designed surface appearing as the exterior surface is coated with the coating film 6, is connected at the molded corner portion of TPO, a difference in color tone between the extrusion moldings and the molded corner portion can be hardly perceived and hence the whole glass run has a sense of feeling of being united into one body to be attractive. Thus, the coating film 6 is extrusion-molded simultaneously with the glass run body portion 30 to thereby obtain the smoothness of the glass run 3E against the door glass 5 and the improvement of the exterior quality at the same time. Further, the coating film 6 is hardly peeled off.

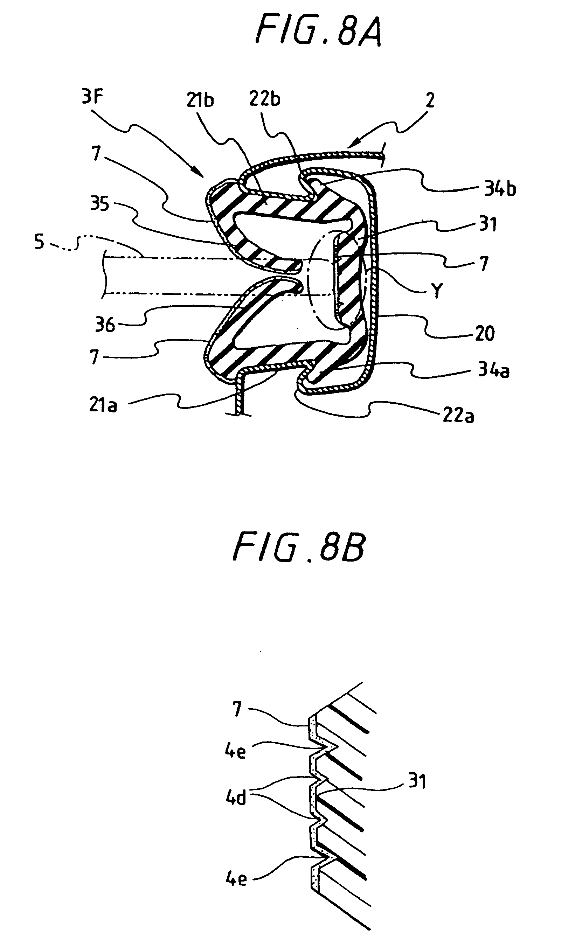

Fig. 8 shows a glass run 3F according to a sixth embodiment. The glass run 3F is different from the glass run 3E in that there are provided no mole lips. Protrusions 34a and 34b are formed in opposite sides of a bottom portion of the glass run 3F to be engaged with stage portions 22a and 22b formed on the opposite side walls 21a and 21b of the channel portion 20 of the door frame 2 so that the glass run 3F is prevented from coming off. The structure of the glass run 3F is substantially the same as that of the glass run 3E and hence parts of the glass run 3F identical to those of the glass run 3D are correspondingly referenced.

In the glass run 3F, a coating film 7 of a sliding material is formed on a bottom surface 31 and the whole designed surface which extends from glass slide-contacting portions of seal lips 35 and 36 to base portions of the same. The coating film 7 acts also as the designed coating member. The method of forming the coating film 7 and the quality of the sliding material are the same as those in the case of the glass run 3E and formation of the coating film 7 provides the same function and effects as those in the case of the glass run 3E.

Similar to the glass run made of EPDM rubber, in the case of the glass run made of TPO, the glass run with a body portion 30 having hardness of about 75 - 80 Hs (JIS-A type hardness) is used. The hardness of the coating film of the sliding material is selected to be about 35 - 45D (Shore D type hardness) in view of glass slidability, damage resistance property, and contact property with a door glass surface.

According to the present invention, by forming the grooves in the bottom surface of the glass run, foreign matter which has been deposited on the bottom surface of the glass run can be discharged into the grooves to thereby reduce the sliding resistance of the door glass against the bottom surface of the glass run. By contriving the size and formation position of the grooves, even if the grooves fill with foreign matter, the sliding resistance of the door glass is not largely increased by the accumulated foreign matter.

## Claims

1. A door glass run adapted to be attached on a door frame (2) of a car door to guide up/down movement of a door glass (5), comprising:
a body portion (30) adapted to be attached on the door frame (2) and having an opening and a bottom surface (31) being adapted to be contacted by an end of the door glass (5);
lips (35, 36) disposed on opposite ends of the opening of said body portion so as to be in contact with the door glass (5) from opposite surfaces thereof; and
a plurality of grooves (4d, 4e) being formed in said bottom surface (31),
**characterized in that**:
said plurality of grooves (4d, 4e) extend longitudinally and are formed in the bottom surface on opposite sides of a flat surface portion having no grooves, which flat surface portion is adapted to be contacted by the end of the door glass (5).

2. A door glass run according to claim 1, wherein said grooves (4d, 4e) are designed so as to have cross-sectional areas that sequentially become larger from the groove (4d) formed adjacent to said flat surface portion to the groove (4e) formed on each opposite side of said flat surface portion.

3. A door glass run according to claim 1 or 2, wherein each groove (4d, 4e) is shaped in the form of an inverted triangle in cross-section.

4. A door glass run according to claim 1, 2 or 3, wherein said grooves (4d, 4e) are mutually-parallel.

5. A door glass run according to any one of claims 1-4, wherein an opening width and a depth of each groove (4d, 4e) sequentially becomes larger from the groove (4d) formed adjacent to said flat surface portion to the groove (4e) formed on each opposite side of said flat surface portion.

6. A door glass run according to any one of claims 1-5, wherein said flat surface portion comprises a different material from the body portion (30), the different material being smoother than the body portion and being capable of fusing bonding to the body portion, and wherein said grooves (4d, 4e) are formed on said different material.

7. A door glass run according to any one of claims 1-6, wherein said lips (35, 36) further comprise smooth layers formed thereon, the smooth layers comprising the same material as the bottom surface (31).

8. A door glass run according to claim 7, wherein said smooth layers completely cover said lips (35, 36).

## Patentansprüche

1. Türscheibenführung, die zum Anbringen an einen Türrahmen (2) einer Kraftfahrzeugtür angepasst ist, um die Aufwärts/Abwärtsbewegung einer Türscheibe (5) zu führen, umfassend:
einen Körperabschnitt (30), der zum Anbringen an den Türrahmen (2) angepasst ist und eine Öffnung und eine Bodenoberfläche (31) aufweist, die zum Kontaktieren durch ein Ende der Türscheibe (5) angepasst ist,
Lippen (35, 36), die an gegenüber liegenden Enden der Öffnung des Körperabschnitts so angeordnet sind, dass sie mit gegenüber liegenden Oberflächen der Türscheibe (5) in Kontakt sind, und
eine Mehrzahl von Rillen (4d, 4e), die in der Bodenoberfläche (31) ausgebildet sind,
**dadurch gekennzeichnet, dass**
sich die Mehrzahl von Rillen (4d, 4e) in Längsrichtung erstreckt und in der Bodenoberfläche auf gegenüber liegenden Seiten eines flachen Oberflächenabschnitts, der keine Rillen aufweist, ausgebildet ist, wobei der flache Oberflächenabschnitt angepasst ist, von dem Ende der Türscheibe (5) kontaktiert zu werden.

2. Türscheibenführung nach Anspruch 1, bei der die Rillen (4d, 4e) so gestaltet sind, dass sie Querschnittsflächen aufweisen, die von der Rille (4d), die angrenzend an den flachen Oberflächenabschnitt ausgebildet ist, zu der Rille (4e), die auf jeder gegenüber liegenden Seite des flachen Oberflächenabschnitts ausgebildet ist, aufeinander folgend größer werden.

3. Türscheibenführung nach Anspruch 1 oder 2, bei der jede Rille (4d, 4e) in der Querschnittsform eines invertierten Dreiecks geformt ist.

4. Türscheibenführung nach Anspruch 1, 2 oder 3, bei der die Rillen (4d, 4e) zueinander parallel sind.

5. Türscheibenführung nach einem der Ansprüche 1 bis 4, bei der die Öffnungsbreite und die Tiefe jeder Rille (4d, 4e) von der Rille (4d), die angrenzend an den flachen Oberflächenabschnitt ausgebildet ist, zu der Rille (4e), die auf jeder gegenüber liegenden Seite des flachen Oberflächenabschnitts ausgebildet ist, aufeinander folgend größer werden.

6. Türscheibenführung nach einem der Ansprüche 1 bis 5, bei welcher der flache Oberflächenabschnitt ein von dem Körperabschnitt (30) verschiedenes Material umfasst, wobei das verschiedene Material glatter ist als der Körperabschnitt und an den Körperabschnitt schmelzgebunden werden kann, und wobei die Rillen (4d, 4e) auf dem verschiedenen Material ausgebildet sind.

7. Türscheibenführung nach einem der Ansprüche 1 bis 6, bei der die Lippen (35, 36) femer darauf ausgebildete glatte Schichten umfassen, wobei die glatten Schichten das gleiche Material wie die Bodenoberfläche (31) umfassen.

8. Türscheibenführung nach Anspruch 7, bei der die glatten Schichten die Lippen (35, 36) vollständig bedecken.

## Revendications

1. Coulisse de vitre de portière destinée à être fixée à un cadre de portière (2) d'une portière de voiture afin de guider le mouvement ascendant ou descendant d'une vitre de portière (5), comprenant :
une partie corps (30) conçue pour être fixée sur le cadre de portière (2) et présentant une ouverture et une surface inférieure (31) destinée à être mise en contact avec une extrémité de la vitre de portière (5);
des lèvres (35, 36), disposées sur les extrémités opposées de l'ouverture de ladite partie corps de façon à être en contact avec la vitre de portière (5) depuis ses surfaces opposées ; et
une pluralité de rainures (4d, 4e) qui sont formées dans ladite surface inférieure (31),
**caractérisée en ce que** les rainures de ladite pluralité de rainures (4d, 4e) s'étendent longitudinalement et sont formées dans la surface inférieure sur les côtés opposés d'une partie à surface plate ne possédant aucune rayure, laquelle partie à surface plate est destinée à être mise en contact avec l'extrémité de la vitre de portière (5).

2. Coulisse de vitre de portière selon la revendication 1, où lesdites rainures (4d, 4e) sont conçues de façon à avoir des aires, en section droite, qui deviennent séquentiellement plus grandes lorsqu'on va de la rainure (4d) formée au voisinage de ladite partie à surface plate jusqu'à la rainure (4e) formée sur chaque côté opposé de ladite partie à surface plate.

3. Coulisse de vitre de portière selon la revendication 1 ou 2, où chaque rainure (4d, 4e) présente la forme d'un triangle renversé en section droite.

4. Coulisse de vitre de portière selon la revendication 1, 2 ou 3, où lesdites rainures (4d, 4e) sont mutuellement parallèles.

5. Coulisse de vitre de portière selon l'une quelconque des revendications 1 à 4, où la largeur d'ouverture et la profondeur de chaque rainure (4d, 4e) deviennent séquentiellement plus grandes lorsqu'on va de la rainure (4d) formée au voisinage de ladite partie à surface plate jusqu'à la rainure (4e) formée sur chaque côté opposé de ladite partie à surface plate.

6. Coulisse de vitre de portière selon l'une quelconque des revendications 1 à 5, où ladite partie à surface plate comprend un matériau différent de celui de la partie corps (30), le matériau différent étant plus lisse que celui de la partie corps et étant en mesure de se lier par fusion à celui de ladite partie corps, et où lesdites rainures (4d, 4e) sont formées sur ledit matériau différent.

7. Coulisse de vitre de voiture selon l'une quelconque des revendication 1 à 6, où, sur lesdites lèvres (35, 36), sont formées des couches lisses, ces couches lisses comprenant le même matériau que la surface inférieure (31).

8. Coulisse de vitre de portière selon la revendication 7, où lesdites couches lisses recouvrent complètement lesdites lèvres (35, 36).
